# EUROPEAN PATENT SPECIFICATION

(11) **EP 3 166 814 B1**
(45) Date of publication and mention of the grant of the patent: **01.08.2018**
(21) Application number: 15818223.8
(22) Date of filing: 24.06.2015
(51) Int. Cl.: G05G 5/03, G05G 5/05, G05G 1/44, B60T 7/04, B60K 26/02, F02D 11/02

(54) **MECHANICAL LINK SYSTEM FOR PEDAL DEVICE**
MECHANISCHES VERBINDUNGSSYSTEM FÜR PEDALVORRICHTUNG
SYSTÈME DE LIAISON MÉCANIQUE POUR DISPOSITIF DE PÉDALE

(30) Priority: 07.07.2014 SE 1450869
(43) Date of publication of application: 17.05.2017
(73) Proprietor: CJ Automotive AB, 514 63 Dalstorp (SE)
(72) Inventor: ALF, Stefan, 514 60 Dalstorp (SE); ULENIUS, Mattias, 413 26 Göteborg (SE)
(74) Representative: Bergenstråhle Group AB
(86) International application number: PCT/SE2015/050730
(87) International publication number: WO 2016/007075

(56) References cited:
- EP-A1- 2 508 958
- EP-A1- 2 578 431
- EP-A2- 0 943 835
- EP-A2- 0 963 871
- EP-A2- 1 645 769
- EP-A2- 2 492 130
- US-A1- 2002 174 738

## Description

### Technical field

The present invention relates generally to mechanical link systems for a pedal device.

### Background art

In prior art it is known to optimize fuel consumption by using accelerator pedals wherein exaggerated depressing of the accelerator is prevented. Relevant link systems for pedal devices are disclosed in EP2578431A1, EP2492130A2, and US20100294074A1. In US20100294074A1 a first return spring exerting urging force to return a pedal to a rest position is arranged in a pedal apparatus. A reaction force adding mechanism is further added to the apparatus comprising a lockable movable member serially arranged in relation to the first return spring. A lock member controlled by an actuator is further controlled based on a detection signal stating that the driver is in state of depressing the accelerator pedal. Upon detection of a depressing state, the lock preventing movement of the movable member is activated whereby the total spring reaction force increases and so the resistance force against the thread force of the driver. Hence, excessive depression by the driver can be suppressed.

A drawback of such accelerator pedal apparatus is the added complexity that comes with requiring an intelligent system based on sensors and actuators to define a wanted thread force curve.

### Summary of invention

An object of the present invention is to alleviate some of the disadvantages of the prior art and to provide a mechanical link system for a pedal device which is simpler, cheaper, and more robust.

Another object of the present invention is to provide a mechanical link system for a pedal device which facilitates the creation of a plurality of separate pedal force curves depending on the need and requirements present.

According to one embodiment of the invention, a mechanical link system for a pedal device, is provided, the mechanical link system comprising:
a bracket device, a pedal arm pivotally arranged in relation to the bracket device at a first portion of the pedal arm, wherein the pedal arm is pivotable between at least a first position, a second position and a third position upon increasing or reducing a load on the pedal arm, wherein the pedal arm is unloaded in the first position and wherein an increasing load is required to pivot the pedal arm to the third position from the first position via the second position, a first link arm, a second link arm, a first spring device, a second spring device, wherein the pedal arm is mechanically interconnected to the first link arm, wherein a first portion of the first link arm is pivotally arranged to a first portion of the first spring device, and
wherein a second portion of the first spring device is arranged to the bracket device, wherein a first portion of the second link arm is pivotally arranged to the bracket device, wherein a second portion of the second link arm is pivotally arranged to a second portion of the first link arm, wherein a third portion of the second link arm is connected to a first portion of the second spring device, wherein a second portion of the second spring device is arranged to the bracket device,
wherein the pivoting of the pedal arm from the first position towards the second position causes the first spring device to be compressed at a higher rate than the second spring device, wherein the pivoting of the pedal arm from the second position to the third position causes the second spring device to be compressed at a higher rate than the first spring device.

According to another embodiment, the pedal arm is mechanically interconnected to the first link arm via a guide element that is slidingly connected to the first link arm.

According to one embodiment, the pedal arm is pivotally arranged to the guide element, at a third portion of the pedal arm, wherein a slide portion of the third link arm is slidingly arranged on the first link arm.

According to one embodiment, the slide portion comprises at least a hysteresis element adapted to slide against a surface portion of the first link arm.

According to one embodiment, the hysteresis element comprises a friction pad.

According to one embodiment, the distance from the first position (2a) to the third position of the pedal arm is between 30% to 20% of the overall length of the pedal arm 2, i.e. the distance between the end portions 2a and 2b.

According to one embodiment, the length l2 of the second link arm is in the range of 75% ≤ l2 ≤ 125% of the length l1 of the first link arm.

According to one embodiment, wherein a relative angle, between the pedal arm and the first link arm when the pedal arm is in a first position, is preferably between 40°and 75°, wherein the relative angle is more preferably between 45° and 55°

According to one embodiment, the first spring device has a lower spring force than the second spring device.

According to one embodiment, the first spring device has a first spring rate k1 in the range of 4 N/mm≤k1 ≤40 N/mm, more preferably in the range of 7 N/mm≤k1≤15 N/mm, most preferably 10 N/mm.

According to one embodiment, the second spring device has a second spring rate k2 in the range of 5 N/mm ≤k2≤25 N/mm, more preferably in the range of 8 N/mm≤k2≤16 N/mm

According to one embodiment, the pedal device is a brake pedal device, an accelerator pedal device or a clutch pedal device.

### Brief description of drawings

The invention is now described, by way of example, with reference to the accompanying drawings, in which:
Fig. 1 shows a perspective view of a mechanical link system for a pedal device according to the invention.
Figs. 2a-2c show a mechanical links system for a pedal device according to Fig. 1, in three separate positions.

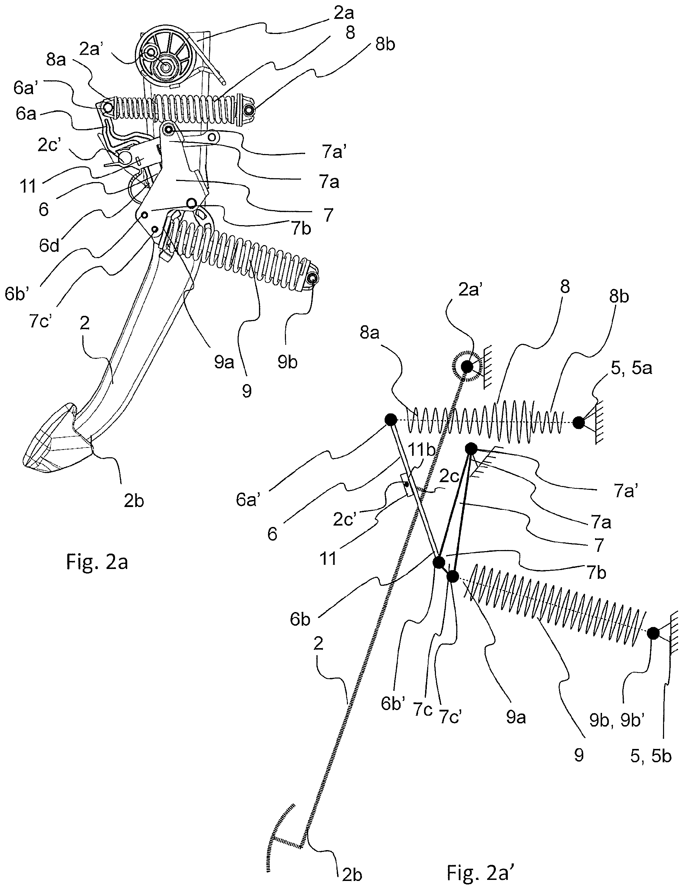

Figs. 2a'-2c' show side views of the invention according to Figs. 2a-2c respectively.

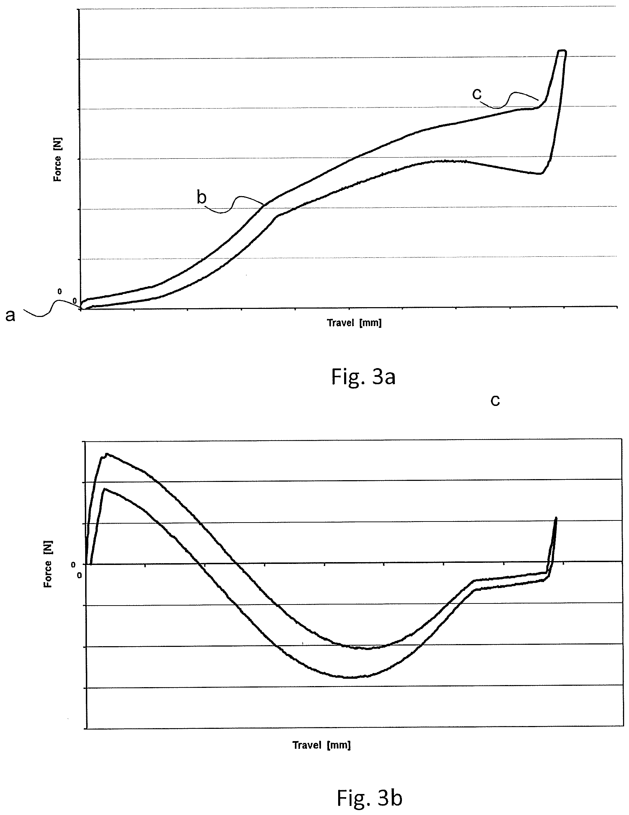

Figs. 3a-3d show positions in a pedal force curve corresponding to the positions of Figs. 2a-2c.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

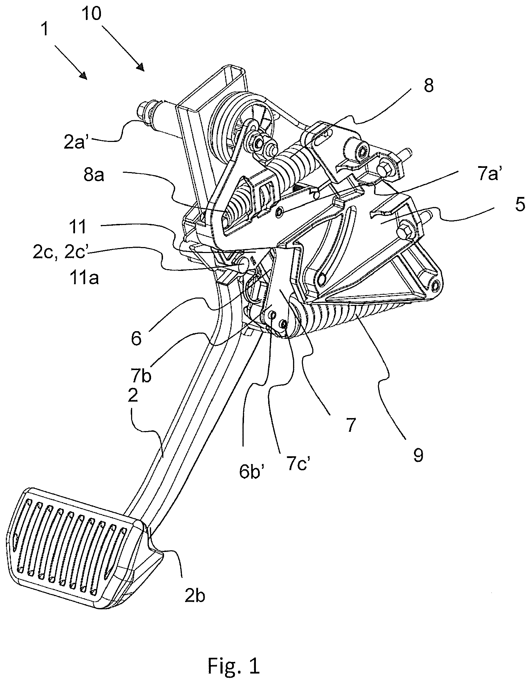

Fig. 1 shows a perspective view of a mechanical link system 1 for a pedal device 10 according to the invention. Pedal arm 2 is pivotally arranged in relation to a bracket 5 at a portion 2a of the pedal arm 2 by the aid of a pivot shaft 2a'. By being pivotally arranged in relation to the bracket 5, the pedal arm 2 may be arranged directly to the bracket 5 or via other parts. According to one embodiment, the portion 2a is essentially at an end point of the pedal arm 2. According to one embodiment, a pedal portion is arranged at the opposite end portion 2b of the pedal arm 2. The bracket 5 may be rigidly arranged to another second bracket 4 (not shown) or the vehicle body. A first link arm 6 of the mechanical link system 1 is provided, wherein the first link arm 6 is adapted to pivot in relation to the bracket 5. According to one embodiment, the portion 6a is essentially at an end point of the first link arm 6, as seen in Figs 2a-2a'. A slide element 11 is arranged at a third portion 2c of the pedal arm 2, via a relatively short pin portion extending essentially perpendicular from the pedal arm 2.. According to one embodiment, the slide element 11 is pivotally arranged at a third portion 2c by the aid of a pivot axis 2c'. According to one embodiment, the third portion 2c/pivot axis 2c' is arranged at a distance from the en portion 2a which is between 30% to 20% of the overall length of the pedal arm 2, i.e. the distance between the end portions 2a and 2b. According to one embodiment, the pivot axis 2c' is arranged at a distance from the end portion 2a which is 25% the overall length of the pedal arm 2. A second portion 11b of the guide element 11 is arranged on the first link arm 6, wherein the pedal arm 2 is mechanically interconnected to the first link arm 6. According to one embodiment, the mechanical interconnection between the pedal arm 2 and the first link arms is manifested by that the guide element 11 is slidingly arranged on the first link arm 6. According to one embodiment, the guide element 11 comprises a slide portion 11b which comprises at least a hysteresis element 11d adapted to slide against a surface portion of the first link arm 6. According to one embodiment, a center point of the second portion 11b of link arm 11, corresponding to position of the pivot axis 2c', is arranged at a distance from portion 6a corresponding to between 40% to 60% of the overall length of link arm 6, i.e. the distance between 6a and 6b of the first link arm 6 According to one embodiment, a center point of the the second portion 11b of link arm 11, corresponding to position of the pivot axis 2c', is arranged at a distance from portion 6a corresponding to between 45% and 55% of the overall length of link arm 6, i.e. the distance between 6a and 6b of the first link arm 6 According to one embodiment, the relative angle, i.e. the "attack angle" between the pedal arm 2 and the first link arm 6 when the pedal arm 2 is in a first position, is between 40°and 75°. According to one embodiment, the relative angle is between 45° and 55°. According to one embodiment the relative angle is 47°. According to one embodiment, the hysteresis element 11d comprises a plastic pad or friction pad. According to one embodiment, the surface portion of the first link arm 6 adapted to receive the hysteresis portion 11d is a curved surface portion 6d. According to one embodiment, the surface portion of the first link arm 6 adapted to receive the hysteresis portion 11d is a straight surface portion 6d. According to one embodiment, the slide portion 11b comprises a plurality of wall portions that at least partly encompasses the first link arm 6 and whose inner portions are adapted to slide against a respective surface portion of the first link arm 6. According to one embodiment, the first link arm 6 has a length l1 in the range of 65mm≤l1≤85mm. According to one embodiment, l1 is 81mm.

A second link arm 7 is pivotally arranged to the bracket device 5 at a first portion 7a of the second link arm 7. According to one embodiment, the second link arm 7 is pivotally arranged to the bracket device 5 by the aid of a pivot shaft 7a'. According to one embodiment, the first portion 7a is arranged at an end portion of the second link arm 7. A second portion 7b is pivotally arranged to the first link arm 6, at the second portion 6b of the first link arm 6. According to one embodiment, the first and second link arms 6, 7 are pivotally connected by the aid of a pivot shaft 6b'. According to one embodiment, the second link arm 7 has a length 12, i.e. the distance from 7a to 7b, in the range of 75%-125% of l1. According to one embodiment, l2 is 69mm.

The bracket 5 may be arranged to a second bracket 4 or the vehicle body (none shown), by the aid of bolts, or a screws and nut connection.

A first spring device 8 is arranged to the first link arm 6 at a first portion 8a of the first spring device 8. According to one embodiment, the first portion 8a is pivotally arranged to the first link arm 6 via a pivot shaft, preferably the pivot shaft 6a'. A second portion 8b of the first spring device 8 is arranged to the bracket 5. According to one embodiment, the second portion 8b is connected to the bracket 5 in a loose articulated manner. According to one embodiment, the first spring device 8 is pivotally arranged to the bracket 5, via a pivot shaft 8b'. According to one embodiment, the first spring rate k1 of the first spring device 8 is in the range of 4 N/mm≤k1≤40 N/mm, more preferably in the range of 7 N/mm≤k1≤15 N/mm. According to one embodiment, the first spring rate is 10 N/mm. According to one embodiment, the first spring rate is lower than the spring rate of the second spring device 9. According to one embodiment, the first spring device 8 may comprise a plurality of springs. According to one embodiment, the plurality of springs may be arranged coaxially in relation to each other. According to one embodiment, the plurality of springs may have different spring rates.

A second spring device 9 is arranged to the second link arm 7 at a first portion 9a of the second spring device 9. According to one embodiment, the first portion 9a of the second spring device is arranged to a third portion 7c of the second link arm 7. According to one embodiment, the first portion 9a of the second spring device is arranged to the second link arm 7 in a loose articulated manner. According to one embodiment, the second spring device 9 is pivotally arranged to the second link arm 7, via a pivot shaft 7c'. A second portion 9b of the second spring device 9 is arranged to the bracket 5. According to one embodiment, the second portion 9b is connected to the bracket 5 in a loose articulated manner. According to one embodiment, the first spring device 9 is pivotally arranged to the bracket 5, via a pivot shaft 9b'. According to one embodiment, the second spring rate k2 of the second spring device 9 is in the range of 5 N/mm≤k2≤25 N/mm, more preferably in the range of 8 N/mm≤k2≤16 N/mm. According to one embodiment, the spring rate of the second spring 9 is lower than the spring rate of the first spring device 8. According to one embodiment, the second spring device 9 may comprise a plurality of springs. According to one embodiment, the plurality of springs may be arranged coaxially in relation to each other. According to one embodiment, the plurality of springs may have different spring rates.

Fig. 2a and Fig. 2a' shows a side view of the mechanical link system 1 for a pedal device 10 in a first position of the pedal arm 2. According to one embodiment the first position corresponds to an equilibrium state of the mechanical link system 1. According to one embodiment, the first position corresponds to a state of the mechanical link system 1, wherein the pedal arm 2 is in its most expanded, i.e. least compressed or activated, state. According to one embodiment, both the first and second spring devices 8, 9 are pre-tensioned against a respective anvil, (not shown) wherein the second spring device 9 is more pre-tensioned that the first spring device 8. Hence, according to one embodiment, the spring force of the second spring device 9 is larger than the spring force of the first spring device 8. Further, the guide element 11 is in a first position along the first link arm 6, and the first spring device 8 and the second spring device 9 are both in their most extended positions available in the mechanical link system 1.

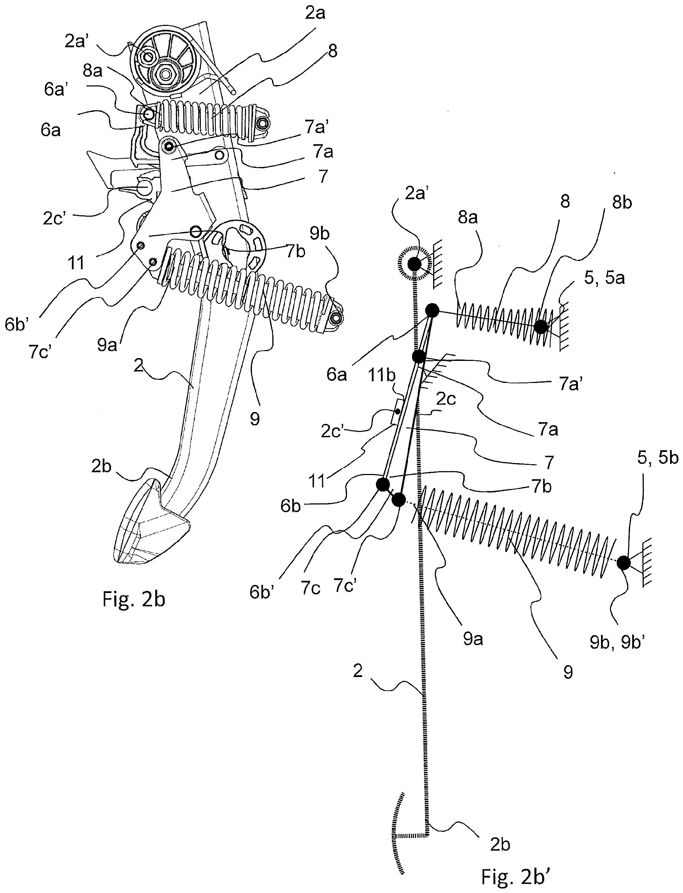

Fig. 2b and Fig. 2b' shows a side view of the mechanical link system 1 for a pedal device 10 in a second position of the pedal arm 2 whereby the pedal arm 2 has pivoted around the pivot shaft 2a' from the position of Figs. 2a, 2a'. Since the pivot points 2a' and 6a' are not in the identical spatial position, the third arm 11 have slid slightly along the first link arm 6, i.e. the hysteresis portion 11d has slid along the surface 6c of the first link arm 6. At the same time a force is transmitted from the pedal arm 2 via the guide element 11 to the first link arm 6 causing the first pivot arm 6 to pivot around the pivot shaft 6b'. The relatively higher pre-tension force of the second spring device 9 will primarily compress the first spring device 8 during this movement, i.e. compress the first spring device 8 at a higher rate than the second spring device 9. This will occur until a point where the spring force of the first spring device 8 corresponds to the spring force of the second spring device 9. This second position shows a side view of the mechanical link system 1 for a pedal device 10 whereby the first spring device 8 has been fully compressed. Slightly before this position, the spring force of the first spring device 8 overcame the spring force of the second spring device 9 due to its compressed state and increasing spring force. Therefore, to a larger extent and at a higher rate than previously during the described movement, the second spring device 9 started to be compressed. This continued until the full compression of the spring device 8. The hysteresis portion 11d has slid further along the surface 6c of the first link arm 6. According to one embodiment, the second position occurs at the position of the pedal arm 2, wherein a further incremental pivoting of the pedal arm 2, will cause the first spring device 8 to be compressed at a essentially similar compression rate as the compression rate of the second spring device 9. Any further pivoting of the pedal arm 2 thereafter will result in a higher compression rate of the second spring device 9 than the first spring device 8.

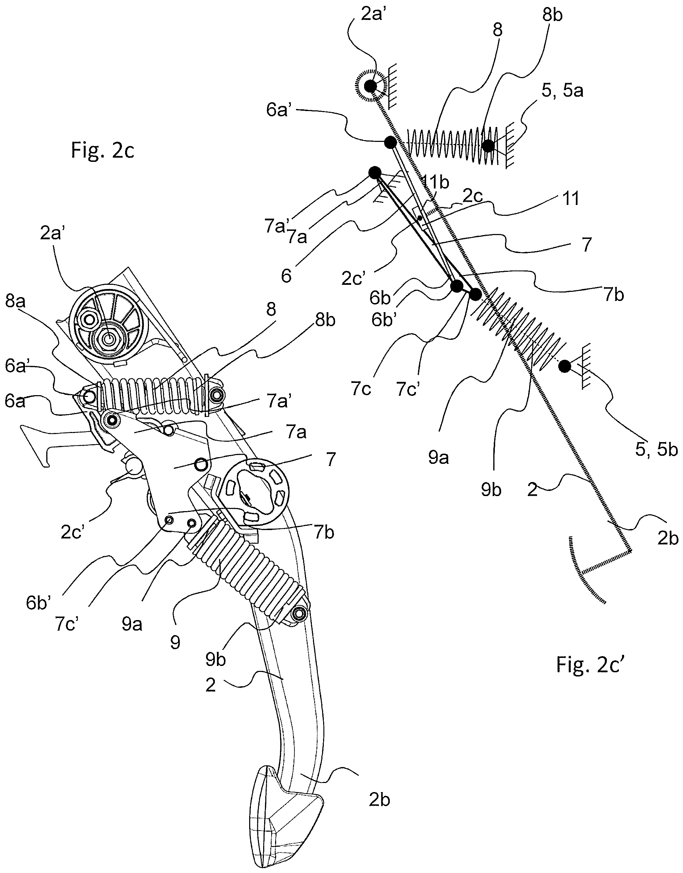

Fig. 2 and Fig. 2c' shows a view of the mechanical link system 1 for a pedal device 10 in a third position of the pedal arm 2 whereby the pedal arm 2 has pivoted further around the pivot shaft 2a' from the position of Fig. 2b/Fig 2b', whereby the second spring device 9 has been almost fully compressed. As noted the first spring device 8 has remained fully compressed from the second to the third position of the pedal arm 2. The hysteresis portion 11d has slid further along the surface 6c of the first link arm 6. Thus, with reference to Fig 2a-2c, and Figs. 2a'-2c' respectively, the pivoting of the pedal arm 2 from the first position to but not including the second position, i.e towards the second position, causes the first spring device 8 to be compressed at a higher rate than the second spring device 9, wherein the pivoting of the pedal arm 2 from the second position to the third position causes the second spring device 9 to be compressed at a higher rate than the first spring device 8.

Figs. 3a-3d shows the pedal force acting on the driver in relation to the amount of compression/pivoting of the pedal arm 2, i.e. in relation to the positions described in Figs. 2a-2c, and Figs. 2a'-2c' with corresponding markings a-c referring to said positions respectively in Fig. 3a.

Fig. 3a shows a pedal force curve, wherein the mechanical link system 1 for a pedal device 10 may be used in a brake pedal device. In Fig. 3a, force in Newton is shown in the y-axis and travel in mm is shown in the x-axis.

According to one embodiment, the brake pedal device 10 may be used in an electrical brake system, often referred to as brake-by-wire, wherein position sensors tracks the position of the pedal arm 2 to generate a corresponding brake force on the wheels, to simulate the feel of a traditional mechanical brake system. In brake-by-wire systems, the driver may experience discomfort since the common relationship between pedal force and brake force allowing a driver to drive in a balanced and safe manner without such simulation is not present. Further, in the brake-by -wire system fail-safe brake capabilities need to be provided, wherein a mechanical braking function sets in if the electrical brake would fail for any reason. A challenge is to combine the existence of a mechanical link system 1 simulating the feel and pedal force and the mechanical braking function, so that the mechanical brake function may be used without requiring an unrealistically high compression force. In essence, during normal driving, the driver compresses the pedal arm 2 so that its position is anywhere between the first and third positions. In a panic situation, i.e. during hard breaking, the pedal force may be in the position X between the second and third position. The line in Fig. 3a between point b and point c further shows the pedal force if the mechanical brake function is initiated. The flattened curve established by the use of the mechanical link system 1 prevents the total force sensed by the driver from becoming too high, i.e. as the required force to activate the mechanical brake function has to be added to the force provided by the mechanical link system 1. Therefore, the combination of further compression of the pedal without essentially adding the required pedal force needs to be resolved. The flattened curve, shown in the curve and corresponding to between the second and third position enables this.

Fig. 3b shows a pedal force curve wherein the mechanical link system 1 for a pedal device 10 may suitably be used in a clutch pedal device, i.e. wherein the variables of the mechanical link system 1 described above has been selected to achieve this pedal force curve.

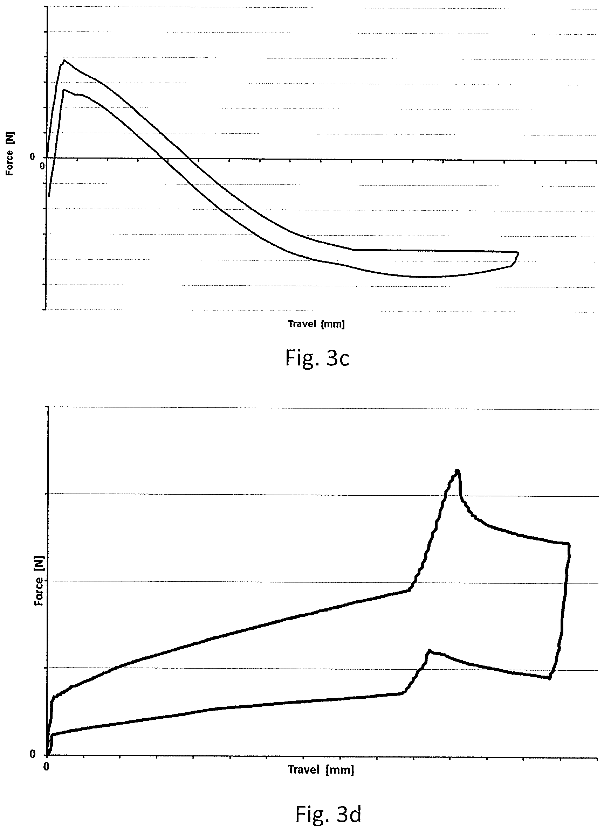

Fig. 3c shows a pedal force curve wherein the mechanical link system 1 for a pedal device 10 may suitably be used in a clutch pedal device, i.e. wherein the variables of the mechanical link system 1 described above has been selected to achieve this pedal force curve.

Fig. 3d shows a pedal force curve wherein the mechanical link system 1 for a pedal device 10 may suitably be used in an accelerator pedal device, i.e. wherein the variables of the mechanical link system 1 described above has been selected to achieve this pedal force curve.

A preferred embodiment of a mechanical link system for a pedal device according to the invention has been described. However, the person skilled in the art realizes that this can be varied within the scope of the appended claims without departing from the inventive idea.

All the described alternative embodiments above or parts of an embodiment can be freely combined without departing from the inventive idea as defined by the appended claims, as long as the combination is not contradictory.

## Claims

1. A mechanical link system (1) for a pedal device (10), comprising:
a bracket device (5),
a pedal arm (2) pivotally arranged in relation to the bracket device (5) at a first portion (2a) of the pedal arm (2), wherein the pedal arm is pivotable between at least a first position, a second position and a third position upon increasing or reducing a load on the pedal arm (2), wherein the pedal arm is unloaded in the first position and wherein an increasing load is required to pivot the pedal arm (2) to the third position from the first position via the second position,
a first link arm (6),
a second link arm (7),
a first spring device (8),
a second spring device (9),
wherein the pedal arm (2) is mechanically interconnected to the first link arm (6), wherein a first portion (6a) of the first link arm (6) is pivotally arranged to a first portion (8a) of the first spring device (8), and wherein a second portion (8b) of the first spring device (8) is arranged to the bracket device (5),
wherein a first portion (7a) of the second link arm (7) is pivotally arranged to the bracket device (5), wherein a second portion (7b) of the second link arm (7) is pivotally arranged to a second portion (6b) of the first link arm (6), wherein a third portion (7c) of the second link arm (7) is connected to a first portion (9a) of the second spring device (9), wherein a second portion (9b) of the second spring device (9) is arranged to the bracket device (5),
wherein the pivoting of the pedal arm (2) from the first position towards the second position causes the first spring device (8) to be compressed at a higher rate than the second spring device (9), wherein the pivoting of the pedal arm (2) from the second position to the third position causes the second spring device (9) to be compressed at a higher rate than the first spring device (8), wherein the pedal arm (2) is mechanically interconnected to the first link arm (6) via a guide element (11) that is slidingly connected to the first link arm (6).

2. The mechanical link system (1) according to claim 1, wherein the pedal arm (2) is pivotally arranged to the guide element (11), at a third portion (2c) of the pedal arm (2), wherein a slide portion (11b) of the third link arm (11) is slidingly arranged on the first link arm (6).

3. The mechanical link system (1) according to claim 2, wherein the distance from the first portion (2a) to the third portion (2c) of the pedal arm (2) is between 30% to 20% of the overall length of the pedal arm (2), i.e. the distance between the end portions (2a and 2b) of the pedal arm.

4. The mechanical link system (1) according to any of the previous claims, wherein the length l2 of the second link arm (7) is in the range of 75%≤l2≤125% of the length l1 of the first link arm (6).

5. The mechanical link system (1) according to any of the previous claims, wherein a relative angle, between the pedal arm (2) and the first link arm (6) when the pedal arm (2) is in a first position, is preferably between 40°and 75°, wherein the relative angle is more preferably between 45° and 55°

6. The mechanical link system (1) according to any of the previous claims, wherein the first spring device (8) has a lower spring force than the second spring device (9).

7. The mechanical link system (1) according to any of the previous claims, wherein the first spring device (8) has a first spring rate k1 in the range of 4 N/mm<k1<40 N/mm, more preferably in the range of 7 N/mm<k1<15 N/mm, most preferably 10 N/mm.

8. The mechanical link system (1) according to any of the previous claims, wherein the second spring device (9) has a second spring rate k2 in the range of 5 N/mm≤k2≤25 N/mm, more preferably in the range of 8 N/mm≤k2≤16 N/mm.

9. The mechanical link system (1) according to any of the previous claims, wherein the pedal device (2) is a brake pedal device, an accelerator pedal device or a clutch pedal device.

## Patentansprüche

1. Mechanisches Verbindungssystem (1) für eine Pedalvorrichtung (10), umfassend:
eine Lagerbockvorrichtung (5),
einen Pedalarm (2), der in Bezug auf die Lagerbockvorrichtung (5) an einem ersten Abschnitt (2a) des Pedalarms (2) schwenkbar angeordnet ist, wobei der Pedalarm zwischen mindestens einer ersten Position, einer zweiten Position und einer dritten Position auf Erhöhen oder Herabsetzen einer Belastung des Pedalarms hin (2) schwenkbar ist, wobei der Pedalarm in der ersten Position entlastet ist, und wobei eine zunehmende Belastung erforderlich ist, um den Pedalarm (2) von der ersten Position über die zweite Position in die dritte Position zu schwenken,
einen ersten Verbindungsarm (6),
einen zweiten Verbindungsarm (7),
eine erste Federvorrichtung (8),
eine zweite Federvorrichtung (9),
wobei der Pedalarm (2) mechanisch an den ersten Verbindungsarm (6) gekoppelt ist,
wobei ein erster Abschnitt (6a) des ersten Verbindungsarms (6) schwenkbar zu einem ersten Abschnitt (8a) der ersten Federvorrichtung (8) angeordnet ist, und wobei ein zweiter Abschnitt (8b) der ersten Federvorrichtung (8) zu der Lagerbockvorrichtung (5) angeordnet ist,
wobei ein erster Abschnitt (7a) des zweiten Verbindungsarms (7) schwenkbar zu der Lagerbockvorrichtung (5) angeordnet ist, wobei ein zweiter Abschnitt (7b) des zweiten Verbindungsarms (7) schwenkbar zu einem zweiten Abschnitt (6b) des ersten Verbindungsarms (6) angeordnet ist, wobei ein dritter Abschnitt (7c) des zweiten Verbindungsarms (7) an einen ersten Abschnitt (9a) der zweiten Federvorrichtung (9) angeschlossen ist, wobei ein zweiter Abschnitt (9b) der zweiten Federvorrichtung (9) zu der Lagerbockvorrichtung (5) angeordnet ist,
wobei das Schwenken des Pedalarms (2) aus der ersten Position zur zweiten Position veranlasst, dass die erste Federvorrichtung (8) mit einer höheren Rate als die zweite Federvorrichtung (9) zusammengedrückt wird, wobei das Schwenken des Pedalarms (2) aus der zweiten Position in die dritte Position veranlasst, dass die zweite Federvorrichtung (9) mit einer höheren Rate als die erste Federvorrichtung (8) zusammengedrückt wird, wobei der Pedalarm (2) mechanisch an den ersten Verbindungsarm (6) über ein Führungselement (11) gekoppelt ist, das gleitend an den ersten Verbindungsarm (6) angeschlossen ist.

2. Mechanisches Verbindungssystem (1) nach Anspruch 1, wobei der Pedalarm (2) schwenkbar zum Führungselement (11) an einem dritten Abschnitt (2c) des Pedalarms (2) angeordnet ist, wobei ein Gleitabschnitt (11b) des dritten Verbindungsarms (11) gleitbar auf dem ersten Verbindungsarm (6) angeordnet ist.

3. Mechanisches Verbindungssystem (1) nach Anspruch 2, wobei der Abstand von dem ersten Abschnitt (2a) zu dem dritten Abschnitt (2c) des Pedalarms (2) zwischen 30 % und 20 % der Gesamtlänge des Pedalarms (2) beträgt, d. h. den Abstand zwischen den Endabschnitten (2a und 2b) des Pedalarms.

4. Mechanisches Verbindungssystem (1) nach einem der vorherigen Ansprüche, wobei die Länge l2 des zweiten Verbindungsarms (7) im Bereich von 75 % ≤ l2 ≤ 125 % der Länge l1 des ersten Verbindungsarms (6) liegt.

5. Mechanisches Verbindungssystem (1) nach einem der vorherigen Ansprüche, wobei ein relativer Winkel zwischen dem Pedalarm (2) und dem ersten Verbindungsarm (6), wenn der Pedalarm (2) in einer ersten Position ist, vorzugsweise zwischen 40 ° und 75 ° beträgt, wobei der relative Winkel weiter bevorzugt zwischen 45 ° und 55 ° beträgt.

6. Mechanisches Verbindungssystem (1) nach einem der vorherigen Ansprüche, wobei die erste Federvorrichtung (8) eine geringere Federkraft als die zweite Federvorrichtung (9) aufweist.

7. Mechanisches Verbindungssystem (1) nach einem der vorherigen Ansprüche, wobei die erste Federvorrichtung (8) eine erste Federrate k1 im Bereich von 4 N/mm ≤ k1 ≤ 40 N/mm, weiter bevorzugt im Bereich von 7 N/mm ≤ k1 ≤ 15 N/mm, am meisten bevorzugt 10 N/mm aufweist.

8. Mechanisches Verbindungssystem (1) nach einem der vorhergehenden Ansprüche, wobei die zweite Federvorrichtung (9) eine zweite Federrate k2 im Bereich von 5 N/mm ≤ k2 ≤ 25 N/mm, weiter bevorzugt im Bereich von 8 N/mm ≤ k2 ≤ 16 N/mm aufweist.

9. Mechanisches Verbindungssystem (1) nach einem der vorherigen Ansprüche, wobei die Pedalvorrichtung (2) eine Bremspedalvorrichtung, eine Gaspedalvorrichtung oder eine Kupplungspedalvorrichtung ist.

## Revendications

1. Système de liaison mécanique (1) pour un dispositif de pédale (10), comprenant:
un dispositif de console (5),
un levier de pédale (2) agencé de façon pivotante par rapport au dispositif de console (5) au niveau d'une première partie (2a) du levier de pédale (2), dans lequel le levier de pédale est pivotant entre au moins une première position, une deuxième position et une troisième position lors de l'augmentation ou de la réduction d'une charge sur le levier de pédale (2), dans lequel le levier de pédale est déchargé dans la première position et dans lequel une charge croissante est nécessaire pour faire pivoter le levier de pédale (2) jusqu'à la troisième position à partir de la première position par l'intermédiaire de la deuxième position,
un premier bras de liaison (6),
un second bras de liaison (7),
un premier dispositif de ressort (8),
un second dispositif de ressort (9),
dans lequel le levier de pédale (2) est interconnecté de façon mécanique au premier bras de liaison (6), dans lequel une première partie (6a) du premier bras de liaison (6) est agencée de façon pivotante à une première partie (8a) du premier dispositif de ressort (8), et dans lequel une deuxième partie (8b) du premier dispositif de ressort (8) est agencée au dispositif de console (5),
dans lequel une première partie (7a) du second bras de liaison (7) est agencée de façon pivotante au dispositif de console (5), dans lequel une deuxième partie (7b) du second bras de liaison (7) est agencée de façon pivotante à une deuxième partie (6b) du premier bras de liaison (6), dans lequel une troisième partie (7c) du second bras de liaison (7) est connectée à une première partie (9a) du second dispositif de ressort (9), dans lequel une deuxième partie (9b) du second dispositif de ressort (9) est agencée sur le dispositif de console (5),
dans lequel le pivotement du levier de pédale (2) à partir de la première position en direction de la deuxième position entraîne la compression du premier dispositif de ressort (8) à un degré plus élevé que le second dispositif de ressort (9), dans lequel le pivotement du levier de pédale (2) à partir de la deuxième position jusqu'à la troisième position entraîne la compression du second dispositif de ressort (9) à un degré plus élevé que le premier dispositif de ressort (8), dans lequel le levier de pédale (2) est interconnecté de façon mécanique au premier bras de liaison (6) par l'intermédiaire d'un élément de guidage (11) qui est connecté de façon coulissante au premier bras de liaison (6).

2. Système de liaison mécanique (1) selon la revendication 1, dans lequel le levier de pédale (2) est agencé de façon pivotante sur l'élément de guidage (11), au niveau d'une troisième partie (2c) du levier de pédale (2), dans lequel une partie coulissante (11b) du troisième bras de liaison (11) est agencée de façon coulissante sur le premier bras de liaison (6).

3. Système de liaison mécanique (1) selon la revendication 2, dans lequel la distance depuis la première partie (2a) jusqu'à la troisième partie (2c) du levier de pédale (2) correspond à entre 30 % et 20 % de la longueur totale du levier de pédale (2), c'est-à-dire la distance entre les parties d'extrémité (2a et 2b) du levier de pédale.

4. Système de liaison mécanique (1) selon l'une quelconque des revendications précédentes, dans lequel la longueur l2 du second bras de liaison (7) est comprise dans la gamme de 75 % ≤ l2 ≤ 125 % de la longueur l1 du premier bras de liaison (6).

5. Système de liaison mécanique (1) selon l'une quelconque des revendications précédentes, dans lequel un angle relatif, entre le levier de pédale (2) et le premier bras de liaison (6) lorsque le levier de pédale (2) se trouve dans une première position, est d préférence compris entre 40° et 75°, dans lequel l'angle relatif est plus préférablement compris entre 45° et 55°.

6. Système de liaison mécanique (1) selon l'une quelconque des revendications précédentes, dans lequel le premier dispositif de ressort (8) présente une force élastique qui est inférieure à celle du second dispositif de ressort (9).

7. Système de liaison mécanique (1) selon l'une quelconque des revendications précédentes, dans lequel le premier dispositif de ressort (8) présente une première constante de rappel k1 qui est comprise dans la gamme de 4 N/mm ≤ k1 ≤ 40 N/mm, mieux encore dans la gamme de 7 N/mm ≤ k1 ≤ 15 N/mm, et idéalement égale à 10 N/mm.

8. Système de liaison mécanique (1) selon l'une quelconque des revendications précédentes, dans lequel le second dispositif de ressort (9) présente une seconde constante de rappel k2 qui est comprise dans la gamme de 5 N/mm ≤ k2 ≤ 25 N/mm, mieux encore dans la gamme de 8 N/mm ≤ k2 ≤ 16 N/mm.

9. Système de liaison mécanique (1) selon l'une quelconque des revendications précédentes, dans lequel le dispositif de pédale (2) est un dispositif de pédale de frein, un dispositif de pédale d'accélérateur ou un dispositif de pédale d'embrayage.
